# EUROPEAN PATENT APPLICATION

(11) **EP 3 064 323 A1**
(43) Date of publication of application: **07.09.2016**
(21) Application number: 16153957.2
(22) Date of filing: 02.02.2016
(51) Int. Cl.: B25F 5/00

(54) **POWER TOOL SYSTEM**

(30) Priority: 02.02.2015 US 201562110773 P; 12.03.2015 US 201562132149 P; 12.03.2015 US 201562132245 P; 25.08.2015 US 201562209490 P; 30.10.2015 US 201562248456 P; 06.11.2015 US 201562251956 P; 28.01.2016 US 201615009091
(71) Applicant: Black & Decker Inc., New Britain, CT 06053 (US)
(72) Inventor: Wenger, Kevin, Baltimore, Maryland 21211 (US); Dyer, Kelly E., Silver Spring, Maryland 20902 (US); Barnett, Corey, Bowie, Maryland 20716 (US); Miller, David, A., Baltimore, Maryland 21224 (US); Brotto, Daniele C., Baltimore, Maryland 21234 (US); Gellner, David C., Nottingham, Maryland 21136 (US); Kell, Copeland, Sykesville, Maryland 21784 (US); Redmond, Corey, Elksridge, Maryland 21075 (US); Cruise, Nathan J., Phoenix, Maryland 21131 (US)
(74) Representative: Clayton-Hathway, Anthony Nicholas

(57) **Abstract**

A power tool system (1000) including at least one power tool (200) and a battery pack (100) selectively coupleable with the power tool (200). The battery pack (100) includes a housing (101), at least one battery cell (120) housed in the housing (101), a circuit board (140) housed in the housing (101), a switch (524) mounted on the circuit board (140), a button (531) actuatable by a user to actuate the switch (524) mounted on the circuit board (140) and a biasing member (525) which biases the button (531) away from a position of actuating the switch (524). The biasing member (525) is made of a nonconductive material.

## Description

The present invention relates to an improved power tool battery pack and power tool system.

It may be desirable to provide an improved button for a power tool battery pack.

According to a first aspect, the present invention provides a power tool system according to Claim 1.

A second aspect of the invention provides a power tool system according to Claim 6.

A third aspect of the invention provides a power tool system according to Claim 11.

Preferred and other optional features of the invention are described and defined in the dependent claims.

It is to be understood that any feature, including any optional feature, of any aspect of the invention may be a feature, including an optional feature, of any other aspect of the invention.

According to another aspect of the invention, there is provided a battery pack including a housing, at least one battery cell housed in the housing, a wireless transmitter housed in the housing, a button, the button configured to initiate pairing with a separate electronic device and an illumination member for illuminating the button.

The illumination member may be configured to illuminate the button with different colors.

The illumination member may be configured to change illumination of the button in conjunction a state of charge of the battery pack.

The illumination member may comprise at least one of a red LED, a green LED and a blue LED.

The illumination member may comprise a red LED, a green LED and a blue LED.

The wireless transmitter may be configured to send a signal indicative of a charge of the battery pack to the separate electronic device.

The wireless transmitter may be configured to receive a signal from the separate electronic device related to a color for the illumination member.

The battery pack may further comprise a lightpipe configured to transmit light from the illumination member to illuminate the button.

The battery pack may further comprise a microcontroller which controls the at least one LED.

The intensity of the at least one LED may be controlled by electronic switches connected to the at least one LED.

The electronic switches may be controlled by the microcontroller.

The microcontroller may control the electronic switches by pulse width modulation.

The at least one LED may comprise at least two LEDs of different color.

According to another aspect of the invention, there is provided a power tool, a battery pack coupleable to the power tool to provide electrical power to the power tool, the battery pack including a housing, at least one battery cell housed in the housing, a wireless transmitter housed in the housing, a button, the button configured to initiate a pairing function, and an illumination member for illuminating the button.

The power tool may include a motor and a trigger for operating the motor.

The power tool system may further include an electronic device which is remote from the power tool and battery pack and which is configured to pair with the battery pack according to the pairing function.

The illumination member may be configured to illuminate the button with different colors.

The illumination member may be configured to change illumination of the button in conjunction with a state of charge of the battery pack.

The illumination member may include at least one of a red LED, a green LED and a blue LED.

The illumination member may include a red LED, a green LED and a blue LED.

The wireless transmitter may be configured to send a signal indicative of a charge of the battery pack to the separate electronic device.

The wireless transmitter may be configured to receive a signal from the separate electronic device related to a color for the illumination member.

The power tool system may further include a lightpipe configured to transmit light from the illumination member to illuminate the button.

The battery pack may further include a microcontroller which controls the at least one LED.

The intensity of the at least one LED is controlled by electronic switches connected to the at least one LED.

The electronic switches are controlled by the microcontroller.

The microcontroller controls the electronic switches by pulse width modulation. The at least one LED comprises at least two LEDs of different color.

The electronic device comprises a screen which is configured to display a state-of-charge of the battery pack.

The state-of-charge displayed by the electronic device corresponds to the state of charge displayed by the button.

A color of the state-of-charge displayed by the electronic device may correspond to a color of the button.

The power tool may be a drill.

The power tool may be a saw.

The power tool may be a sander.

The power tool may be an impact driver.

The electronic device may be a phone, a tablet, a laptop computer or a desktop computer.

According to another aspect of the invention, there is provided a battery pack including a housing, at least one battery cell housed in the housing; a wireless transmitter housed in the housing; a button, the button configured to initiate pairing with an electronic device so that the battery pack may wirelessly communicate with the electronic device; a connection section including a first electrical connector configured to supply power to a power tool; and a charging port configured to supply power to an external device. The charging port can be in an on state in which the charging port is operable to supply power to the external device and an off state in which the charging port is not operable to supply power to the external device.

The charging port may be configured to change from the on state to the off state after a predetermined amount of time after charging from the charging port begins.

The predetermined amount of time may be equal or less than the watt-hour rating of the battery being charged divided by the voltage times the current out of the USB jack from the battery pack.

The predetermined amount of time may be ten hours or less.

The predetermined amount of time may be eight hours or less.

The predetermined amount of time may be seven hours or less.

The predetermined amount of time may be set by a user of the separate electronic device.

The predetermined amount of time that can be set by the user may have an upper limit.

The predetermined amount of time may be equal to or less than an Amp hour rating of the battery pack divided by a current drawn from the battery pack by the charging port.

The charging port may be a USB port.

According to another aspect of the invention, there is provided a power tool system which includes a power tool and a battery pack. The battery pack includes a housing, at least one battery cell housed in the housing; a wireless transmitter housed in the housing; a connection section including a first electrical connector configured to supply power to the power tool when the battery pack is connected to the power tool; and a charging port configured to supply power to an external device. The charging port can be in an on state in which the charging port is operable to supply power to the external device and an off state in which the charging port is not operable to supply power to the external device.

The charging port may be configured to change from the on state to the off state after a predetermined amount of time after charging from the charging port begins.

The predetermined amount of time may be ten hours or less.

The predetermined amount of time may be eight hours or less.

The predetermined amount of time may be seven hours or less.

The predetermined amount of time may be set by a user of the separate electronic device.

The predetermined amount of time set by the user may be limited.

The predetermined amount of time may be equal to or less than an Amp hour rating of the battery pack divided by a current drawn from the battery pack by the charging port.

The charging port may be a USB port.

The separate electronic device may include one of a computer, a tablet computer and a phone.

The power tool may be a drill.

According to another aspect of the invention, there is provided a power tool system which includes a plurality of power tools including a drill and at least one battery pack. The battery pack is selectively couplable to the plurality of power tools to provide electrical power to a coupled power tool to which the battery pack is coupled. The battery pack includes a housing, at least one battery cell housed in the housing; a wireless transmitter housed in the housing; a connection section including a first electrical connector configured to supply power to the coupled power tool and a charging port configured to supply power to an external device. The charging port can be in an on state in which the charging port is operable to supply power to the external device and an off state in which the charging port is not operable to supply power to the external device.

The charging port may be configured to change from the on state to the off state after a predetermined amount of time after charging from the charging port begins.

The predetermined amount of time may be set by a user of the separate electronic device.

The predetermined amount of time is equal to or less than an Amp hour rating of the battery pack divided by a current drawn from the battery pack by the charging port.

According to another aspect of the invention, there is provided a power tool system including at least one power tool. A battery pack is selectively coupleable with the power tool and provides power to the power tool. The battery pack includes a housing, at least one battery cell housed in the housing, a circuit board housed in the housing, a switch mounted on the circuit board, a button actuatable by a user to actuate the switch mounted on the circuit board, a biasing member which biases the button away from a position of actuating the switch, a connection section which couples to the power tool and through which power is supplied from the battery pack to the power tool, wherein the connection section includes electrical connectors and the electrical connectors are mounted on the circuit board. The biasing member may be made of a non-conductive material.

The biasing member may be made of an elastic material.

The biasing member may be made of a material with a Shore A durometer of 30 or greater.

The switch may initiate a pairing function of wirelessly pairing the battery pack with another device.

Activation of the switch may initiate operation a charging port.

The battery pack may further include a light which selectively illuminates the button.

The power tool include at least one of a drill and a saw.

According to another aspect of the invention, there is provided a power tool system including at least one power tool and a battery pack selectively coupleable with the power tool and providing power to the power tool. The battery pack includes a housing, at least one battery cell housed in the housing, a circuit board housed in the housing, a switch mounted on the circuit board, a button actuatable by a user to actuate the switch mounted on the circuit board and a biasing member which biases the button away from a position of actuating the switch. The biasing member may be made of a resilient material.

The biasing member may be made of a non-conductive material.

The biasing member may be made of an elastic material.

The biasing member may be made of a material with a Shore A durometer of 30 or greater.

Activation of the switch may initiate a pairing function of wirelessly pairing the battery pack with another device.

The battery pack may further include a charging port and activation of the switch initiates operation the charging port.

The battery pack may further include a connection section which couples to the power tool and through which power is supplied from the battery pack to the power tool, wherein the connection section includes electrical connectors and the electrical connectors are mounted on the circuit board.

According to another aspect of the invention, there is provided a power tool system including at least one power tool and a battery pack selectively coupleable with the power tool and providing power to the power tool. The at least one power tool may be a drill or a saw. The battery pack includes a housing, at least one battery cell housed in the housing, a circuit board housed in the housing, a switch mounted on the circuit board, a button actuatable by a user to actuate the switch mounted on the circuit board and a connection section which couples to the power tool and through which power is provided from the battery pack to the power tool. The connection section includes electrical connectors. The housing includes a bottom side and a top side and the connection section is disposed on the top side and the button faces in an upward direction.

The button may be disposed on the top side of the housing.

The electrical connectors may be mounted on the circuit board.

Actuation of the button may initiate a pairing function of wirelessly pairing the battery pack with another device.

The battery pack may further include a charging port and activation of the switch initiates operation the charging port.

Exemplary embodiments of the invention will now be described with reference to the accompanying drawings, of which:
Fig. 1 illustrates an exemplary system according to the invention;
Fig. 2 is a circuit schematic of an exemplary power tool battery pack;
Fig. 3 is a flowchart of different exemplary processes that can be performed by the system of Fig. 1;
Fig. 4 illustrates an exemplary embodiment of a computing device and a screen according to the invention;
Figs. 5A-5D illustrate exemplary embodiments of a battery pack;
Fig. 6 illustrates an exemplary embodiment of a circuit for the battery packs shown in Figs. 5A-5D;
Figs. 7A and 7B illustrate exemplary embodiments of a battery pack with the housing removed;
Fig. 8 illustrates an exemplary embodiment of a computing device illustrating aspects of an app according to an exemplary embodiment of the invention;
Figs. 9A-9C illustrate an exemplary embodiment of a computing device illustrating aspects of an app according to an exemplary embodiment of the invention;
Fig. 10A-10C illustrates an exemplary embodiment of a computing device illustrating aspects of an app according to an exemplary embodiment of the invention;
Fig. 11 illustrates an exemplary embodiment of a power tool of the invention in the form of an inflator;
Figs. 12-14 illustrate an exemplary embodiment of a computing device illustrating aspects of an app according to an exemplary embodiment of the invention;
Figs. 15-17 illustrate an exemplary embodiment of a mechanical functioning of the embodiment of a battery pack illustrated in Figs. 5A-5D;
Fig. 18 is an exemplary electrical diagram of a battery pack;
Fig. 19 is an illustration of exemplary embodiments of a computing device and a battery pack; and
Fig. 20 is an illustration of an exemplary embodiment of a battery pack charging an external device.

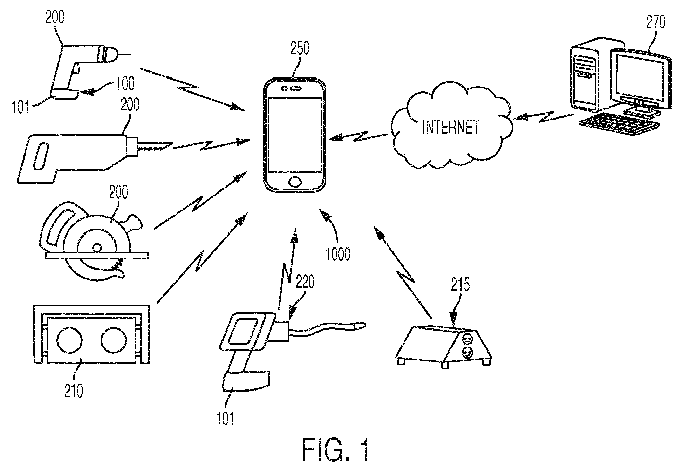

FIG. 1 illustrates an exemplary system 1000 for enhancing power tools according to the invention. In particular, power tools 200 may be drill, circular saws, reciprocating saws, jigsaws, miter saws, table saws, etc. Some of the power tools 200 may be cordless and thus be connectable to power tool battery packs 100. Persons skilled in the art shall understand that "battery pack" and "power tool battery pack" as used herein shall mean a set of rechargeable battery cells 120 disposed in a housing 101 that for use with a power tool that is powered by an electrical motor, such as a drill 200, circular saw, reciprocating saw, jigsaw, etc. Persons skilled in the art shall recognize that power tool battery pack 100 may be the power tool battery packs disclosed in US Patent Nos. 7,405,536, 7,618,741, 7,602,146 and/or 8,044,640, which are hereby incorporated in full by reference, modified so as to include a communication circuit, and preferably a wireless communication circuit 126, as further explained below.

System 1000 may also include chargers 210 for battery packs 100, including radio chargers such as the radio charger disclosed in US Patent No. 6,308,059, which is hereby incorporated in full by reference.

System 1000 may also include a non-motorized sensing tool 220, as described in US Patent No. 8,251,157, which is hereby incorporated in full by reference. Persons skilled in the art shall recognize that sensing tool 220 may be an inspection device, a clamp meter, an IR thermometer, an IR camera, an inspection camera, a wall scanner, etc.

System 1000 may also include a portable power supply 215, such as that described in US Publication No. 2011/0090726, filed on November 1, 2010, which is hereby incorporated in full by reference.

System 1000 may also include a computing device 250, such as a personal computer, tablet, mobile telephone, smartphone, etc. Computing device 250 is preferably connectable to a server 270 via the internet. Persons skilled in the art will recognize that computing device 250 preferably connects to the internet via a wireless communication circuit/protocol, such as Wi-Fi, Bluetooth, Zigbee, 3G/4G data systems, etc.

It is desirable that power tools 200, battery packs 100, non-motorized sensing tools 220, portable power supply 215 and/or chargers 210 be in communication with computing device 250. Preferably such communication will occur via a wireless communication system 126, such as Wi-Fi, Bluetooth, Zigbee, infrared light, RF, etc. Persons skilled in the art will recognize that other communication schemes may be used that do not require a direct wired connection between computing device 250 and the power tools 200, battery packs 100, non-motorized sensing tools 220, portable power supply 215 and/or chargers 210. Such communication schemes may involved transmitting audio signals, using capacitive codes and/or visual codes.

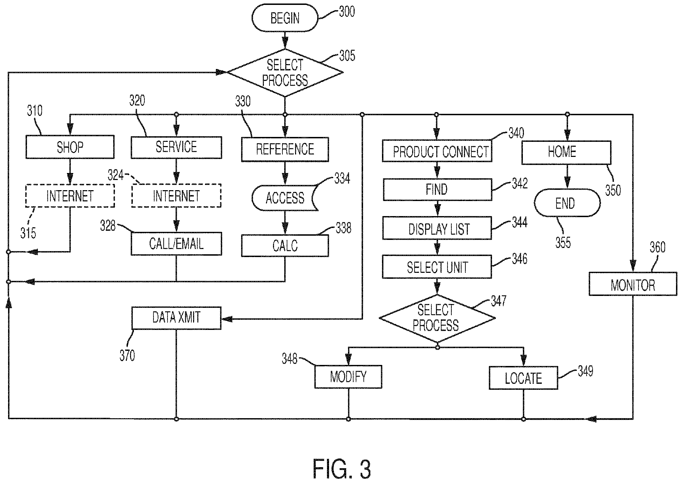

Computing device 250 may have a program or app that implements the steps shown in the flowchart of FIG. 3. A user may begin the program at step 300 by, for example, selecting the appropriate app/program on her computing device 250. Alternatively, the program or app can begin automatically upon connection with or request from the power tools 200, battery packs 100, non-motorized sensing tools 220, portable power supply 215 and/or chargers 210.

In response to such selection, computing device 250 may show several process choices for the user to select (step 305). These process choices may include shopping for tools or related products (step 310), obtaining service information (step 320), refer to construction reference materials (step 330), connect to nearby power tools or products (step 340), or go back to a home menu to end the app (step 350).

For example, if the user selects the shopping process (step 310), computing device 250 may communicate with a server 270 via the internet (step 315) that would provide the user information on the different available products, as well as allow the user to shop online for such products. Persons skilled in the art may recognize that the computing device 250 may use GPS or cell-location data to identify the closest stores carrying the desired products.

If the user selects the service process (step 320), computing device 250 may communicate with a server 270 via the internet (step 324) that provides the user information on the different available services, including the closest repair/service center, contact information, etc. Persons skilled in the art may recognize that the computing device 250 may use GPS or cell-location data to identify the closest repair/service center. The user can then call or email the repair/service center (step 328) to schedule an appointment. Persons skilled in the art are further referred to US Application No. 61/570,484, filed on December 14, 2011, entitled "System and Method for Interacting With Customer," which is fully incorporated herein by reference, for further details on the service process.

Persons skilled in the art will recognize that computing device 250 may transmit data to the repair/service center about battery pack 100, power tool 200, charger 210, portable power supply 215 and/or non-motorized sensing tool 220, such as cycle numbers, clutch activation count, current draw profiles, and other usage data. Similarly, computing device 250 can transmit such data to other destinations, such as a supervisor's computing device, to alert the supervisor of a user's use or abuse of a battery pack 100, power tool 200, charger 210, portable power supply 215 and/or non-motorized sensing tool 220. Such data can be used to monitor the user's productivity.

Persons skilled in the art will recognize that the computing device 250 could be used to record noises originating from power tool 200 and send those noises to the repair/service center for diagnosis of the power tool 200. The app could also analyze the noises and provide some troubleshooting advice for power tool 200.

If the user selects the reference process (step 330), the app would access data stored in memory (step 334). Persons skilled in the art will recognize that the memory could be within or without computing device 250. Such data could include reference materials, such as handbooks on different construction techniques, the different construction codes, such as the International Building Code, the International Residential Code, the International Plumbing Code, etc. The data could also include other executable routines, like calculator code for converting measurements between different units (e.g., converting feet to meters), calculating stair rise run, baluster spacing, roof pitches, HVAC calculations, etc., as well as different cost estimation tools, landscaping tools, etc.

The user can also choose to connect to nearby power tools, battery packs or other products (step 340). If such process is selected, computing device 250 would proceed to wirelessly contact all nearby power tools, battery packs and other products (step 342). Once contact has been made, computing device 250 would display a list of nearby power tools, battery pack and other products (step 344).

It may be preferable to color-code the different listed power tools, battery pack and other products. For example, tools that are owned (or paired) with the user can be shown in green. Tools that can't be contacted or accessed by the user can be shown in red. Tools that are owned by colleagues or a group are shown in yellow. Tools that have not been associated with a particular user can be shown in white.

Similarly, persons skilled in the art will recognize that computing device 250 may show a list of previously-paired power tools, battery packs and other products, and show the ones that are nearby in one color, while showing the others in another color. In this manner, the user will know which power tools, battery packs and other products are within a certain radius, thus conducting a quick inventory check.

The user can then select a particular power tool, battery pack or other product (step 346). Once a particular power tool, battery pack or other product is selected, computing device 250 can display different attributes for such product for review. For example, in the case of battery pack 100, some of the attributes can include an identifying name (e.g., "Danny's Pack 1"), a picture icon, device model, the charge status, password (for accessing the tool information through another user's phone), temperature, number of charge cycles, etc. Persons skilled in the art will recognize that this information is kept in memory 128 of the battery pack 100, which is then transmitted via the wireless communication circuit 126 to computing device 250, possibly upon a direct request from computing device 250.

Persons skilled in the art will recognize that some of the attributes can be modified. For example, the identifying name and the picture icon can be modified by the user by selecting a modification process (steps 347, 348) and inputting the new information. This data can then be wirelessly transmitted to the battery pack 100 for storage within a memory 128. Persons skilled in the art will recognize that the user can input the new information (as well as other commands, etc.) via a keyboard or touchscreen in computing device 250 and/or by giving verbal commands which are recognized by the computing device 250.

In addition to modifying data related to the battery pack identity, a user can modify data related to the performance of battery pack 100 via computing device 250. For example, a user can program the battery pack 100 to announce when it is at full charge. This announcement can be communicated via the display of computing device 250, haptic feedback of computing device 250 and/or battery pack 100, and/or sound emitted by the computing device 250 and/or transmitted via a speaker or piezo 127 of battery pack 100.

Similarly, the user can program battery pack 100 (or portable power supply 215) to announce when it is near discharge, when it is hot, when it is outside of communication range with computing device 250, etc. Persons skilled in the art will recognize that this can be accomplished by monitoring the outputs of voltage monitor 115, current sensor 145, temperature 143, etc. in battery pack 100.

The user can also disable (and enable) the battery pack 100 via computing device 250. Persons skilled in the art will recognize that "enable" and "disable" refer to the ability of battery pack 100 to provide power to a power tool 200 and/or the ability of battery pack 100 to receive power from a charger to charge battery cells 120. The ability (or inability) to provide power to a power tool 200 can be enabled or disabled by controlling driver circuit 141 to maintain semiconductor device 130a in an on- or off-state, respectively. Similarly, the ability (or inability) to receive charging power to charge battery cells 120 can be enabled or disabled by controlling driver circuit 141 to maintain semiconductor device 130b in an on- or off-state, respectively.

The user can also program battery pack 100 so that it is only enabled (and thus providing power and/or accepting charging power) when it is within vicinity of computing device 250. This can be accomplished by computing device 250 sending a ping signal to battery pack 100. If battery pack 100 receives the ping signal, then battery pack 100 continues to provide power and/or accept charging power. However, if battery pack 100 does not receive a ping signal for a predetermined period of time, battery pack 100 can assume that it is outside of communication range with computing device 250 and disable itself (thus not providing power or accepting charging power).

The user can also program battery pack 100 so that it is only enabled (and thus providing power and/or accepting charging power) when certain conditions are met. For example, battery pack 100 would be enabled for up to a predetermined number of charge cycles, a predetermined time period or number of uses, and then disabled until reset by the user via computing device 250.

Persons skilled in the art will recognize that, while the above description is particular to battery packs, the same functionality can be provided for portable power supply 215, including the ability to enable/disable portable power supply 215, etc.

Similarly, a power tool 200, non-motorized sensing tool 220 and/or chargers 210 provided with a programmable control and wireless communication circuit may also be contacted via computing device 250. For example, power tool 200 can store tool usage patterns, tool conditions, etc., which can be transmitted to computing device 250 and to a server 270 for further analysis, etc. As disclosed above, computing device 250 can display such information. For example, computing device 250 can display the speed (rpm), bevel angles, miter angles, brush wear, the presence or condition of a guard and/or attachment, etc. of the power tool 200.

Like battery pack 100, power tool 200 may be programmed to change different attributes or features. For example, a user can set the maximum motor speed or power, or provide a predetermined output (such as half the motor speed or power) when not within the vicinity of computing device 250, etc. Similarly, it may be desirable to control any adjustable feature in a power tool via computing device 250. For example, the computing device 250 may adjust output pressure in compressors, the amount of grease outputted by a grease gun when the trigger is pulled (persons skilled in the art will recognize that computing device 250 can set a grease gun's pump to run for X pump cycles whenever the trigger is pulled; the higher the number of pump cycles per trigger pull, the larger the amount of grease outputted), the speed of a flywheel-based nailer (such as the one disclosed in US Patent No. 7,137,541, which is wholly incorporated herein by reference) in order to adjust for a different nail size or material in which the nail is being driven into, or a desired temperature for a heated jacket (such as the one disclosed in US Publication No. 2011/0108538, which is wholly incorporated herein by reference).

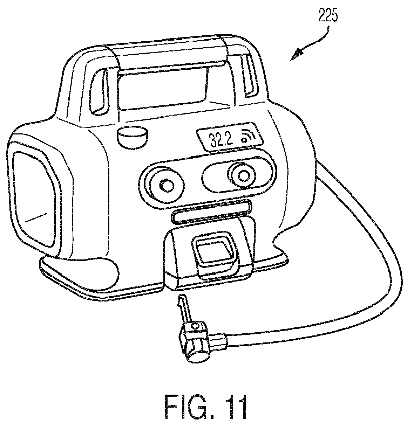

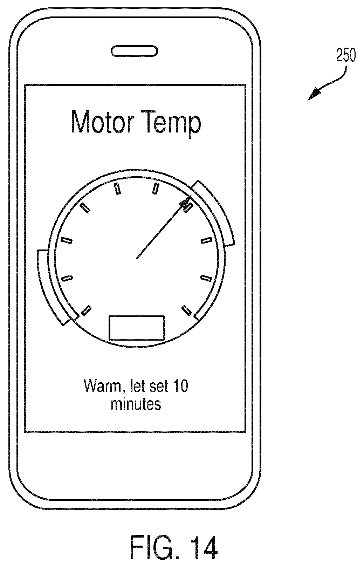

Another embodiment of a tool 200 which can be used in the present system is inflator 225, which is shown in Fig. 11. When the inflator is used with the present system, various tasks for the inflator can be handled by the app. For example, a user may set the inflator's target pressure (psi) on computing device 250 and the inflator can inflate a ball or other item until the target pressure is reached. The inflator status can be monitored on the computing device 250, namely the current pressure (psi). A user can use the computing device 250 to start or stop the inflator. The inflator 225 can cause the computing device 250 to display an alert when the inflation process is complete. The inflator 225 can send information about recommended pressure (psi) levels for various jobs such as inflating car tires to the computing device 250 and can provide instructions for using the inflator 225. The inflator 225 can also transmit a temperature of the inflator 225 to the computing device, the inflator would have a temperature sensor as is known in the art for monitoring a temperature of the inflator 225 (see Fig. 14). The inflator of the present application can be any of various types, including the types shown in US Patent No. 8,418,713, which is herein incorporated by reference; US Patent No. 6,095,762, which is here in incorporated by reference; and International Patent Application Publication No. WO/06095144, which is herein incorporated by reference.

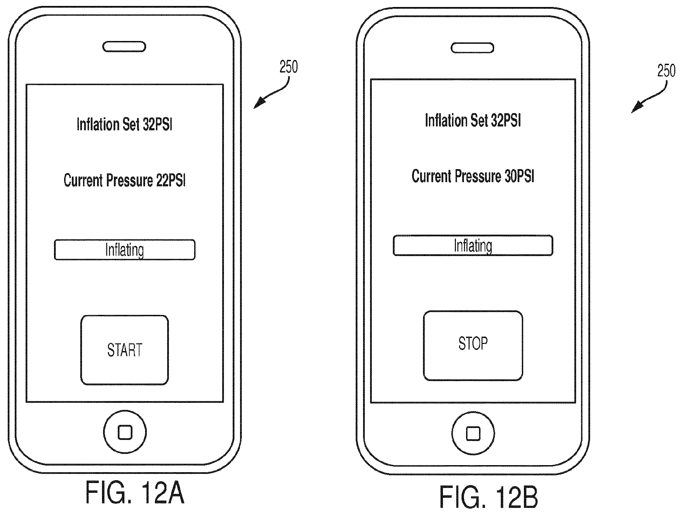

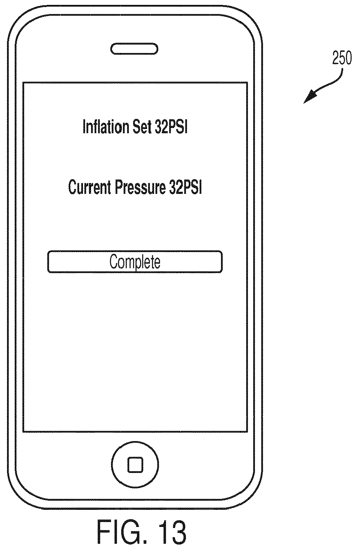

Use of the app on the computing device 250 for operating the inflator is shown in Figs. 12-14. As shown in Fig. 12A, the inflation pressure is set by a user of the app to 32PSI. The inflator 225 transmits the current pressure of 22PSI to the computing device 250 and the computing device 250 displays the current pressure of 22PSI. The inflator also transmits a status of "Inflating" which the computing device 250 displays. As shown in Fig. 12B, as the pressure changes, the current pressure data sent from the inflator 225 to the computing device 250 changes and the information displayed on the computing device 25 changed according (i.e., to 30PSI). As shown in Fig. 13, when the current pressure equals the inflation pressure setting of 32PSI, the app shows that the inflation is "Complete".

The user can also enable and disable different modes of operation, such as allowing/not allowing power tool 200 to rotate in a reverse direction. As mentioned above, the user can enter such commands via a keyboard or touchscreen on computing device 250 and/or by providing verbal commands recognized by computing device 250.

Alternatively, computing device 250 can be used to determine the appropriate attribute or feature to modify. For example, computing device 250 can scan a visual code (such as a bar code or QR code) on an accessory, such as a grinding wheel, via its camera, determine the identity of the accessory and modify the attributes of the power tool 200 accordingly. In such manner, computing device 250 can determine that, for example, a small grinding wheel has been installed on grinder/power tool 200 and that the maximum speed should be 10000 rpm. Computing device 250 would then program grinder/power tool 200 to not exceed such maximum speed. This would allow a user to use a grinder as a polisher (and vice versa) by selecting the appropriate speed for the desired accessory.

Computing device 250 could also scan the accessory itself with its camera, such as the shape of a drill bit or router bit, determine the identity and attributes of the accessory based on the resulting image and program power tool 200 to match the attributes of the accessory. Alternatively, computing device 250 could scan the workpiece or an identifying code thereon which identifies the type of material constituting the workpiece. Persons skilled in the art will recognize that recognition software can be used to determine the identity of the accessory based on the shape of the accessory. Computing device 250 can then access a database within the computing device 250 or in a separate server connectable via a telecommunications network, such as a cellular network, to obtain the information on the different attributes of the accessory.

In addition to information as to the specific accessory, the database may provide the app with information requests. For example, for a particular router bit, the database may instruct the app to ask the user what type of wood is being shaped with the router bit. The app can then customize the power tool settings depending on the type of wood selected by the user, allowing for a more efficient work operation. The app could also indicate whether the router bit is not recommended for that particular type of wood, and/or whether a different router bit is better for shaping that particular type of wood.

Persons skilled in the art will recognize that, if computing device 250 has an RFID system, computing device 250 could read an RFID tag disposed on the accessory, then access the database to obtain the attributes of the accessory, and then modify/program power tool 200 accordingly.

Computing device 250 may also be used to modify the different trigger profiles of power tool 200 as described in US Publication No. 2011/02544272, filed on April 7, 2011, entitled "Power Tool Having a Non-Linear Trigger-Speed Profile," which is hereby fully incorporated by reference. A user can use computing device 250 to select between the different trigger profiles applicable to power tool 200. Alternatively, the user can use computing device 250 to program a customized trigger profile.

Other customizable features on power tools and other products may include the blink patterns of LEDs, the time period that an LED remains on after releasing a trigger switch, audio beeping patterns for particular conditions in products with speakers or piezos, the selected radio station and/or volume on a radio charger 210, etc. The app can also turn on and off the power tool 200 or accessories thereof like a dust collector, open/close gates therein, etc.

If the power tool 200 has servos that can be used to adjust different features of power tool 200 (such as the miter saw disclosed in US Patent Publication No. 2001/0000856, filed on January 5, 2001, and wholly incorporated herein by reference), the app can be used to adjust the different features by controlling the servos. For example, the user can select a bevel angle on the computing device 250 and the app will control the bevel angle servo to the desired location. In this manner, the user can program a list of desired workpieces, i.e., a cut list, and the app can control the miter saw/power tool 200 to obtain those cuts. Similarly, the servos can be used to adjust the stroke length in a saw that allows for such adjustment, such as in reciprocating saws or jigsaws.

It may be beneficial to provide servos to perform functions that are difficult to do, like opening a blade clamp on a grinder or a recip saw. Rather than requiring the user to torque open a blade clamp, the user would select such operation in the app.

Computing device 250 can also be programmed to control an apparatus, such as the router disclosed in US Patent Publication No. 2006/0206233, filed on March 9, 2005, which is wholly incorporated herein by reference. The app can control such apparatus to obtain the cuts selected by the user.

Persons skilled in the art will recognize that these features may be programmed individually, e.g., changing the maximum motor speed, and/or in bulk by selecting a particular setting. In other words, the user can select a LAG bolt setting where the maximum motor speed is adjusted, a particular trigger profile is selected, and a particular alert is chosen, all by selecting one setting on computing device 250.

Similarly, an owner of power tool 200 can select settings for different users according to their level of skill. For example, the owner may have a standard setting for experienced users and a lowered power setting for less skilled users. In this manner, the owner can change the torque output or the start-up speed curve (and other attributes) of a rotary hammer/power tool 200 to a setting that is manageable by an inexperienced user, such as a soft-start setting.

Persons skilled in the art will recognize that, if each individual carries an ID or RFID tag that can be scanned or recognized by the computing device 250 or power tool 200, the computing device 250 (and/or power tool 200) can detect when power tool 200 is used by a new user (due to the presence of the new ID/RFID tag). Computing device 250 (and/or power tool 200) can then change the settings of power tool 200 to accommodate the new user. Furthermore, computing device 250 could show a how-to-use video or provide other information to the new user, especially if the new user is noted to be an inexperienced user.

A user can even select specific alerts for the power tool 200, as she did for battery pack 100. For example, the user can program computing device 250 to display a warning when a specific condition occurs. These conditions may include brush wear beyond a selected threshold, high current draw (possibly representing an overload condition), etc.

Persons skilled in the art will recognize that these alerts can have a visual component, such as an alert window displayed on the screen of computing device 250, and/or an audio component, such as a sound or song (possibly selected by the user) played through the speaker(s) of computing device 250 or a radio charger 210, or through an earphone connected to computing device 250. Persons skilled in the art will recognize that such earphone could be wireless connected to computing device 250 via BlueTooth, or could be connected via a wire to the computing device 250.

Furthermore, a user can also use computing device 250 to locate the selected power tool, battery pack or other product (step 349). Due to the wireless communication between computing device 250 and battery pack 100, it is possible to send a command from computing device 250 to battery pack 100 to start emitting a sound via speaker/piezo 127, so as to assist in locating such battery pack 100. It is also possible to have the computing device 250 poll all nearby battery packs 100 for a particular state. Thus computing device 250 can determine the battery pack with the highest/lowest charge, highest/lowest temperature, most charge cycles, etc., then send a command to the particular battery pack 100 to start emitting a sound.

The user can also select going back to a home menu to end the app (step 350). This would end the app (step 355) and go to a home menu of the computing device 250.

The app can also monitor the battery pack 100, charger 210 and/or power tool 200 (step 360). The app can enter a monitoring state automatically and/or when selected by the user. During this monitoring process, the app can keep track of power tool usage, present current draw, etc. and store and/or use that information for analysis by a service department. In this manner, the service department can determine whether a power tool 200 has been abused.

The app can also use that information to better utilize the power tool 200. For example, the app can receive PWM, voltage and/or current draw information from battery pack 100 and/or power tool 200 and establish a macro that would allow the user to repeat the current draw. Persons skilled in the art will recognize that such current draw profile can represent a torque curve for driving a fastener into a surface. Having a repeatable draw profile will allow the user to easily set a custom torque setting.

Persons skilled in the art will recognize that an app can be looking for similar patterns and adjust battery pack 100 and/or power tool 200 accordingly for better efficiency, effectively learning the user's use patterns. The app can do such analysis on data patterns, or even in real time. For example, the app can receive current information, trigger position and/or speed information, and run power tool 200 using that information to maximize run-time. Other information that the app can monitor includes bias force/bias load, gear settings, battery voltage, the presence of on-tool guard or side handles, etc.

Persons skilled in the art will recognize that, if the app monitors the presence of on-tool guards or side handles, the app can prevent use of the power tool 200 if the guards or side handles are not detected, and/or limit the power output for better control. Persons skilled in the art will also recognize that the presence of these guards and side handles can be detected by providing, for example, switches on power tool 200 that get activated once the guards or side handles are installed.

Similarly, if the app monitors motor current draw and gear setting, the app can select and/or indicate the best gear ratio (or speed setting) to run at optimum efficiency. If the motor is drawing a lot of current and the transmission is set at a high speed, the app may alert the user to switch to a lower speed or may switch the gear setting automatically.

Persons skilled in the art will understand that the app can limit the power tool's output speed and torque by monitoring bias force/bias load if the app determines that the bias load is not adequate to keep a screwdriver bit engaged to a screw. The app could also turn off or delay the impacts provided by the transmission of power tool 200.

The app can also use the sensors in the computing device 250 to determine working conditions and adjust the usage of battery pack 100 and/or power tool 200. For example, if the user wears the computing device 250 on his wrist and the app notices a sudden movement (by monitoring the accelerometers in the computing device 250), the app can shut down the power tool 200 by turning off battery pack 100 or power tool 200, or limit the amount of power provided by battery pack 100 or to power tool 200. The accelerometers in the computing device 250 can also be used to monitor vibration. When a certain threshold of vibration is reached, the user can be alerted to take a rest break.

Similarly, the app can adjust the brightness of the LEDs in power tool 200 according to the output from the ambient light sensors of computing device 250. For example, if the ambient light sensors of computing device 250 detect a dark environment, the app can increase or decrease the brightness of the LEDs.

Additionally, the app can use the on-board microphone of computing device 250 to listen to the ambient noise. The app can then create an opposite soundwave and play it through an on-board speaker and/or transmit it to the radio charger 210. Persons skilled in the art will recognize that playing an opposite soundwave will cancel or lower the ambient noise.

The computing device 250 can also control power tool 200 and/or charger 210 according to the use of the computing device 250. For example, if computing device 250 receives a phone call, the app can turn off power tool 200 and/or lower the volume on radio charger 210.

Persons skilled in the art will understand that computing device 250 can also be used for controlling multiple items at the same time. For example, when the app detects a power tool 200 being turned on, such as when the user pulls on a trigger, the app can increase the volume on radio charger 210.

The app can also transmit data (step 370) about battery pack 100, power tool 200, charger 210, portable power supply 215 and/or non-motorized sensing tool 220 to specific destinations. For example, a wall scanner 220 may transmit data about a scanned wall via computing device 250 to an archive or to a store website. Similarly, the image data received from an IR camera can be sent to the computing device 250 and made part of a document drafted in computing device 250, which in turn can be emailed or transmitted to a client.

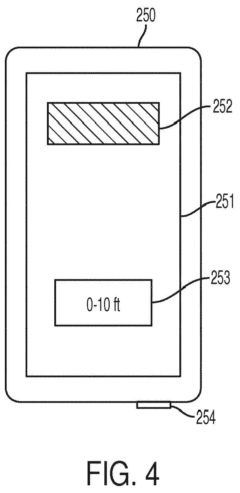

Fig. 4 shows an app according to another exemplary embodiment of the present application. The app and other parts work the same as that shown in Figs. 1-3 unless indicated otherwise. According to the exemplary embodiment shown in Fig. 4, the app may be programmed to indicate a relative location and/or distance of the power tool 200 from the computing device 250. According to an exemplary embodiment, the app may cause the computing device 250 to provide a display or sound based upon a measurement of the power present in a signal, such as a Received Signal Strength Indicator (RSSI). The RSSI is a measurement of the strength of a received radio signal and the higher the RSSI, the stronger the signal. In the case of the present embodiment, the higher the RSSI measured by the computing device 250, the stronger the signal being received by the computing device 250 from the power tool 200 and/or the tool battery 100. The computing device 250 can provide various indications based on the strength of the RSSI.

The RSSI of the signal provided from the power tool 200 to the computing device 250 can be indicated by the computing device 250 in any of a variety of ways. For example, the screen 251 color 252 can change from a red color as the RSSI moves from a relatively weak signal to a yellow color when the computing device 250 receives an intermediate RSSI and a green color as the computing device 250 receives a relatively high RSSI. In another exemplary embodiment, a speaker of the computing device 250 and/or a speaker or piezo 127 of the battery pack 100 may provide a sound such as a beep through the computing device speaker 254 at varying frequencies as the computing device 250 receives a higher or lower RSSI value from the power tool 200 or battery pack 100. In another exemplary embodiment, differing distance 253 measurements can be shown on the screen 251 depending upon the RSSI value. These exemplary embodiments may be combined or done separately. For example, as shown in Fig. 4, a color indication 252 may be displayed at the same time as a distance display 253.

RSSI scales can vary. For example, in a first wireless transmission system, the RSSI may vary from a value of 0 to 100 and in another transmission system the RSSI may vary from 0 to 127. An example of the various potential displays based on the RSSI received by the computer device 250 is shown in the table below in which an RSSI scale of 0-100 is used. The present application uses an exemplary 0-100 RSSI scale unless otherwise noted.

| **RSSI** | **Color** | **Sound Frequency** | **Distance** |
|---|---|---|---|
| 80-100 | Green | 4 Hz | 0-10 feet |
| 50-80 | Yellow | 2 Hz | 10-20 feet |
| 0-50 | Red | 1 Hz | 20-30 feet |

Of course, the values shown in the table are merely examples. For example, four or more different sound frequencies may be used or the sound frequency may be continuously variable. Similarly, more colors or other indications may be used. Additionally, different or more ranges of RSSI may be used.

In addition or alternatively to the above, the battery pack 100 or tool 200 may provide an indication based on the RSSI received by the power tool 200 and/or battery pack 100 from the computing device 250. For example, the battery pack 100 may emit a beep or other sound from the speaker or piezo 127 when the battery pack 100 detects a RSSI signal from the computing device 250 of greater than 0. Different levels or thresholds may also be set. For example, the battery pack 100 may emit the sound only when the RSSI is greater than 0. Alternatively, the battery pack 100 may emit the sound only when the RSSI is greater than 10 or greater than 20. In other embodiments, the battery pack may emit a sound only when the RSSI.

According to another exemplary embodiment, the sound may change in volume or frequency as the RSSI changes. For example, the decibel or frequency of the beep or other sound provided by the battery pack 100 may vary according to the chart below.

| **RSSI** | **Sound Frequency (Decreasing with Rising RSSI)** | **Sound Frequency (Increasing with Rising RSSI)** | **Decibel Level (Decreasing with Rising RSSI)** | **Decibel Level (Increasing with Rising RSSI)** |
|---|---|---|---|---|
| 0-50 | 4 Hz | 1 Hz | 55 dB | 35 dB |
| 50-80 | 2 Hz | 2 Hz | 45 dB | 45 dB |
| 80-100 | 1 Hz | 4 Hz | 35 dB | 55 dB |

Of course, the values shown in the table are merely examples. For example, four or more different sound frequencies may be used or the sound frequency may be continuously variable. Similarly, greater or continually varying decibel levels may be used. Additionally, different or more ranges of RSSI may be used.

Although the above embodiments have been described with respect to an RSSI signal, other signals such as, for example, a Received Channel Power Indicator (RCPI) signal may be used. As with the RSSI, various different indications can be made by the computing device 250, battery pack 100 or the power tool 200 based upon the level of the signal.

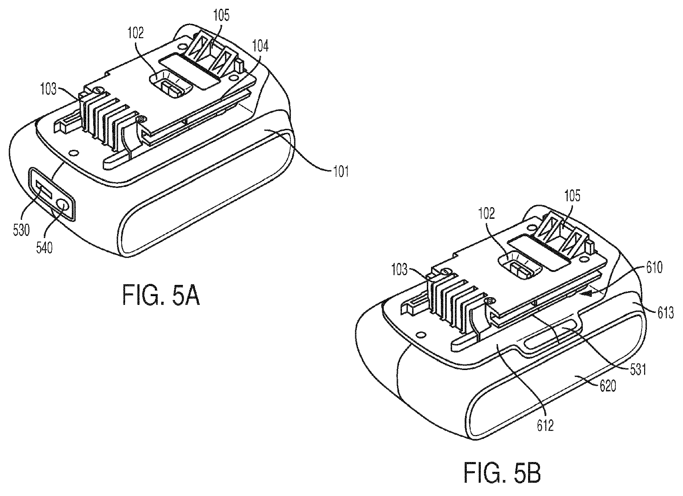

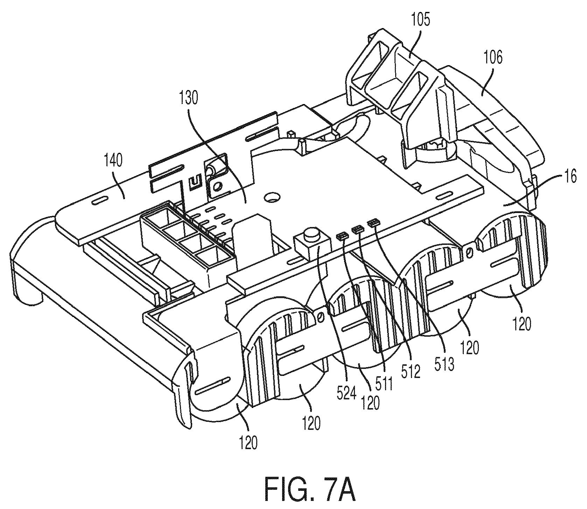

In another exemplary embodiment, the power tool battery pack may further include an LED display for displaying a state-of-charge of the battery pack on the battery pack. These exemplary embodiments of the battery pack are shown in Figs. 5A-7B. The power tool battery pack 100 includes a set of rechargeable battery cells 120 disposed in a housing 101. The housing includes guide rails 104 for connecting with a power tool and a latch 105 for securing the battery to the power tool. The latch 105 can be moved by depression of the latch actuator 106 (shown in Fig. 7A), which may be integral with the latch 105. A battery pack with guide rails such as those shown these figures is more fully shown and described in US Patent No. 6,729,413, which is incorporated herein by reference.

Fig. 7A is an illustrative drawing showing an inside of the battery pack 100. As shown, the pack includes a plurality of rechargeable battery cells 120. A cradle 16 sits over the battery cells 120 and a printed circuit board (PCB) 140 is connected to the cradle 16. Electrical connectors (not shown) are mounted on the PCB 140 and connect with power tools through the connection section 103. A battery pack of this general construction is shown and described in more detail in US Patent No. 9,065,106, which is incorporated herein by reference.

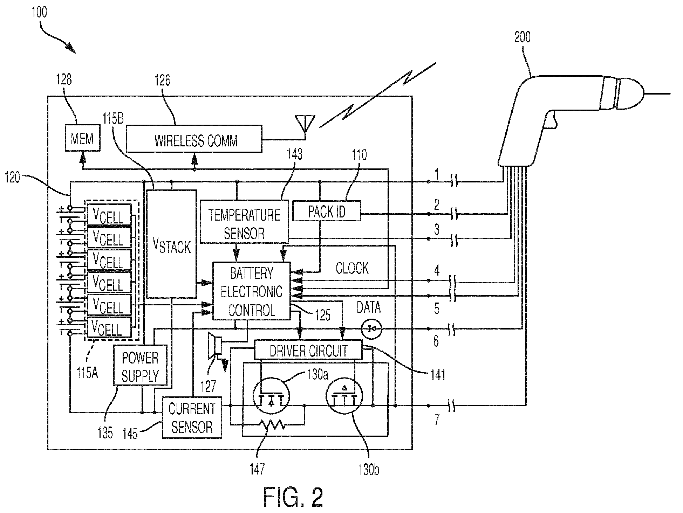

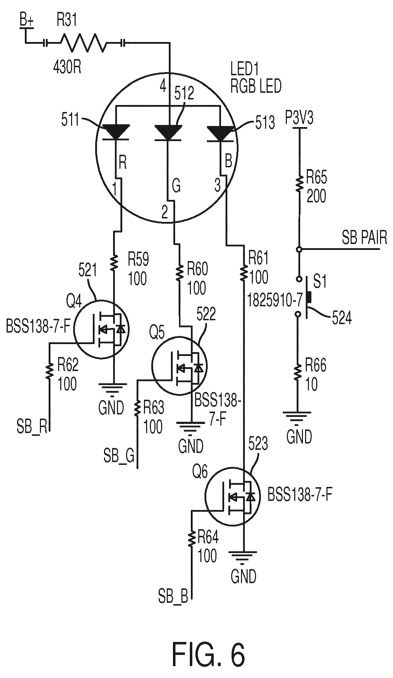

In the exemplary embodiment, the battery pack includes an RGB LED consisting of three discrete LEDs - a red LED, a green LED and a blue LED. The LEDs and electronic switches are shown in Fig. 6. As shown in Fig. 6, there is a red LED 511, a green LED 512 and a blue LED 513. The LEDs 511-513 are controlled by electronic switches 521, 522 and 523. The electronic switches 521, 522 and 523 are connected to and operated by the control 125 shown in Fig. 2 to selectively light the LEDs 511-513 to produce varying intensities and colors. Specifically, gates of the electronic switches 521-523 are connected to the control 125. As previously discussed, the control 125 is connected to a wireless communicator 126 that sends and receives data from the computing device 250. The computing device 250 has an application that can display a state of charge on a color gradient graph. The application can match the perceived color of the LEDs 511-513 to the RGB color value of the state-of-charge- of the battery that is displayed on the color gradient graph in the application. The control 125 may do this through pulse width modulation of the gates of the electronic switches to vary the duty cycle of the various LEDs 511-513 to change the LED display's perceived color value. In this case, the computing device 250 sends the RGB color info to the battery pack through the wireless communicator 126 and that information is sent to the electronic control 125. The electronic control 125 then varies the duty cycle to match the RGB color value.

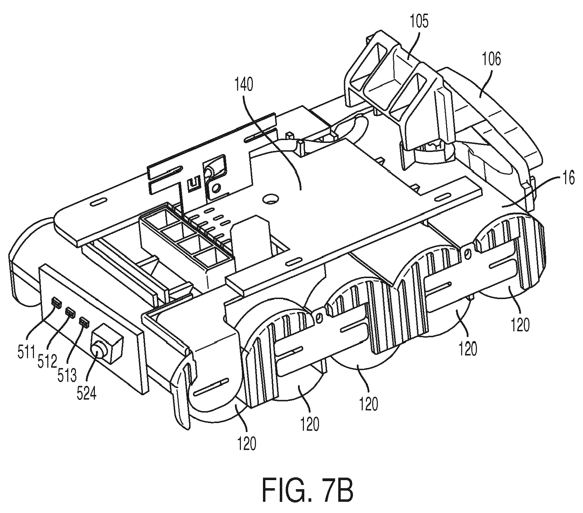

Figs. 5A-5D show different locations for the LED displays 530, 531, 532, 533. Fig. 5A illustrates an LED display 530 on a rear of the battery pack 100. In this instance, the display 530 is separate from a pairing button 540 which activates pairing of the battery pack 100 to the electronic device 250 through the wireless communicator 126. When the display 530 is located on the rear of the battery pack 100, the battery pack may require an additional printed circuit board (PCB) 150 for mounting of the LEDs 511-513, as is shown in FIG 7B.

Fig. 5B illustrates an LED display 531 on a top surface of the battery pack 100 near a side. In this case, the LED display 531 also serves as a button for the pairing function. The LED display 531 may be actuated from above (i.e., it is top actuated).

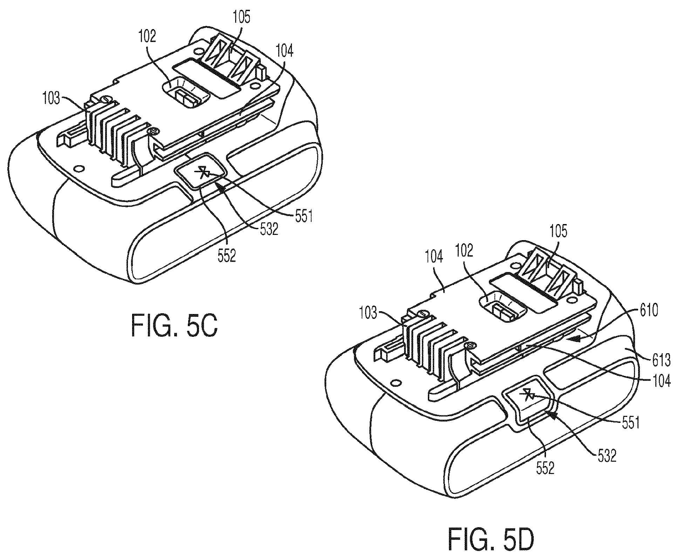

Fig. 5C illustrates an LED display 532 which is also located on a top surface of the battery pack 100 near a side. As with the LED display 531, the LED display 532 serves a dual function as a pairing function button. The LED display may be actuated from above (i.e., it is top actuated). Additionally, the display 532 includes an icon 551 and is surrounded by a display portion 552. The icon 551 and the display portion 552 may be illuminated according to the same color scheme and intensity or may be controlled to separately. For example, the icon 551 and display portion 552 may both be illuminated according to a state-of-charge of the battery, as described above. Alternatively, only the display portion 552 may be illuminated according to a state-of-charge of the battery pack 100. In that instance, the icon 551 could be illuminated according to its pairing function. Alternatively or additionally, the icon 551 may be illuminated according to a pairing function when a pairing function is occurring and according to a state-of-charge of the battery pack 100 when no pairing function is taking place.

Fig. 5D illustrates an LED display 533 which is also located on a top surface of the battery pack 100 near a side. As with the LED displays 531 and 532, the LED display 533 serves a dual function as a pairing function button. The LED display may be actuated from a side (i.e., it is side actuated). Additionally, the display 533 includes an icon 561 and is surrounded by a display portion 562. As with the LED display 532, described above, the icon 561 and the display portion 562 may be illuminated according to the same color scheme and intensity or may be controlled to separately.

Fig. 7A illustrates a battery pack 100 with the housing 101 removed. As shown in Fig. 7A, the pair button 524 and the red, blue and green LEDs 511, 512, 513 are mounted on a main printed circuit board 140. Light from the LEDs 511, 512, 513 are directed via a lightpipe (not shown) to light the LED displays 531, 532, 533. The location of the button 524 and LEDs 511, 512, 513 shown in Fig. 7A correspond to a placement that for LED displays 531, 532, 533 of Figs. 5B-5D. As can be seen, these display placements allow for the LEDs 511, 512, 513 and button 524 to be placed on the main printed circuit board (PCB) 140. The particular placement of the LEDs 511, 512, 513 and button 524 can be changed. For example, the LEDs 511, 512, 513 may, for example, surround the button 524 and/or be formed in a triangular arrangement or be in a diagonal line.

As shown in Fig. 7B, the battery pack 100 may also include a second PCB 150. The second PCB 150 can accommodate a pairing button 524 and the three LEDs 511, 512, 513 thereon so that the LED display 530 and button 540 can be disposed on a rear of the battery as shown in Fig. 5A. As previously discussed, Fig. 5A shows a separate button 540 and display 530. However, the display and button could be combined as shown in Figs. 5B-5D and maintained at this position.

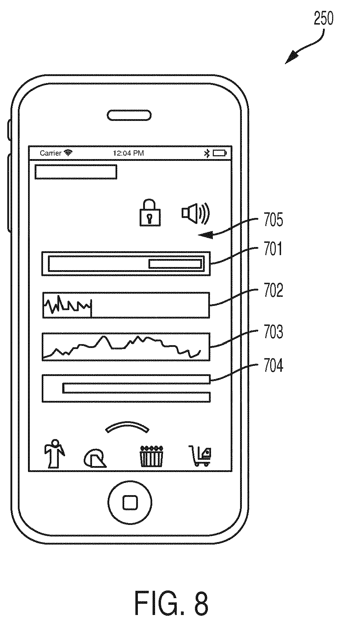

Fig. 8 illustrates a computing device 250 with a screen 251 showing five different indicators related to the battery pack 100 to illustrate features of an embodiment of the app. Particularly, the app may display a remaining charge bar 701 which represents a state-of-charge of the battery. The app may include a charge cycle display 702. The charge cycle display includes a number of bars, each indicating one charge cycle. Each charge cycle represents the battery having been charged once. The height of each bar represents the amount of charge the battery receives in each charge cycle. As the charge cycle display 702 is filled up from left-to-right, it indicates to a user that the battery pack has been through a number of charging cycles. The battery pack will eventually wear down after a number of charging cycles. The width of the charge cycle display 702 may represent a maximum recommended number of charging cycles for the battery pack 100.

Indicator 703 indicates a storage temperature of the battery pack 100. A battery pack 100 may wear down quicker if it is stored at high temperatures. The line shown in indicator 703 can move higher when the battery is stored at a higher temperature and lower when the battery is stored at a lower temperature. In this manner, a user can see if the battery pack 100 is being stored at an undesirable temperature.

Indicator 704 indicates a remaining capacity of the battery pack 100. As a battery pack 100 is used, charged, stored, ages and the like, the capacity of the battery pack 100 shrinks. For example, if a battery pack 100 starts at a first time at a capacity of 100% at a second time, later on, the battery pack may only have a remaining capacity of 90%. That is, when fully charged at the second time, the battery pack would only have 90% of the charge that the battery pack 100 had when fully charged at the first time.

Indicator 705 includes a current health of the battery pack. The current health is a composite of the indicators 701-704. That is, the app calculates a current health 705 based on some combination of the remaining charge, charge cycles, storage temperature and remaining capacity. In one embodiment, the current health 705 may be based on all of the factors shown by indicators 701-704. In another embodiment, the current health 705 may be based on some subset of those factors, for example only the factors shown by indicators 702-704. Additionally, each factor may be weighted equally or the factors may have different weights. Alternatively or additionally, if any factor does not meet a minimum requirement that could disproportionately affect the current health rating. For example, if the remaining capacity is below a certain level, (e.g., 80% or 70%, etc.), the current health may be shown as an F, fail or error, regardless of the other factors. In some instances the measuring the charge cycles may include measuring the number of insertions of the battery pack into a battery charger. For example, each time the battery pack is inserted into an active battery charger, the battery pack 100 may sense the insertion and record the insertion number in its memory. The number of insertions can then be displayed to a user on the computing device 250. The battery pack 100 may sense each insertion in various ways, for example by sensing a flow of current charging the pack or via an ID line on the battery pack. One of the connectors 103 may constitute an ID line and when a voltage is applied to the ID line that can be read by the pack, for instance, by an analog to digital converter inside the pack. The analog to digital converter being connected to the controller 125 and the appropriate connector 103.

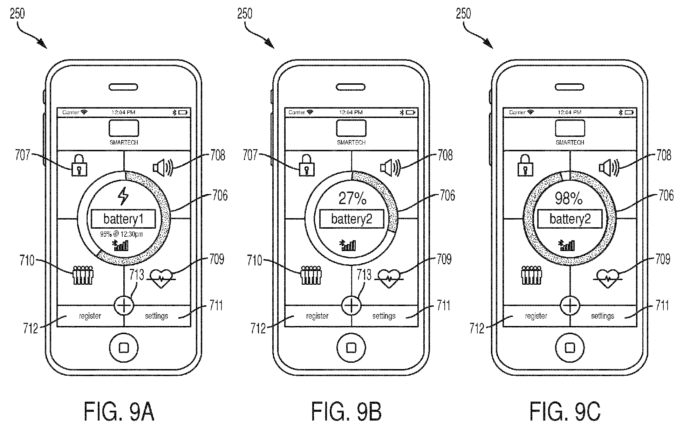

Figs. 9A-9C shows other representations of the app on the computing device 250 performing various functions. Fig. 9A illustrates a batter charging screen which indicates that the battery pack 100 is currently being charged. In this case, the battery pack 100 being charged is identified as battery1 to identify a first battery. The state of charge is indicated by a circular indicator 706. The indicator 706 may be displayed in various colors, including to match the LED displays on the battery mentioned previously.

Fig. 9B illustrates a state of charge of a second battery pack 100 that is identified as battery2 to differentiate the particular pack being charged from battery1. Again, the state of charge is shown on indicator 706. Fig. 9C illustrates battery2 in a nearly fully charged state.

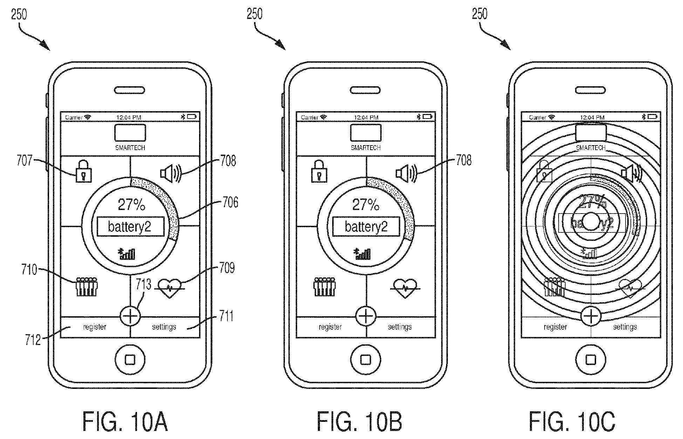

Figs. 10A-10C illustrate further representations of the app on the computing device 250 performing various functions. Fig. 10A illustrates a lock function icon 707 having been activated. The icon 707 activates disable function, which has been previously described. Fig. 10B illustrates a locate icon 708 being activated. The locate icon 708 activates the locate function discussed previously having been activated. Fig. 10C illustrates a locate screen indicating a location information regarding the tool or battery pack. The locate function was described in further detail previously. The screen may blink lighter, differently in different colors or in some other manner to indicate that a user is getting closer or farther away from the tool. These figures also include a community button 710 to allow community or social functions on the app to be activate; a health button 709 which allows alerts regarding the battery health previously discussed with reference to Fig. 8 to be shown. The community or social functions may include items such as the shopping process or the service process described above. There is further a register icon 711 allowing a user to register the tool; a settings icon 712 allowing a user to choose various settings, such as what alerts or health indicators can be displayed; and an add tool icon 713 so that tools can be added, as previously discussed.

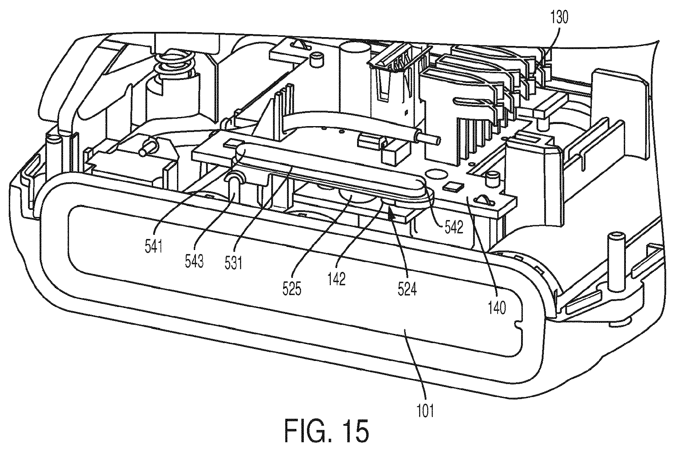

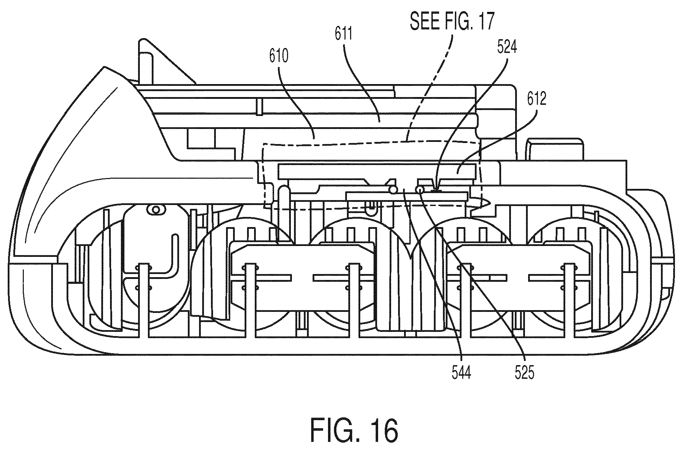

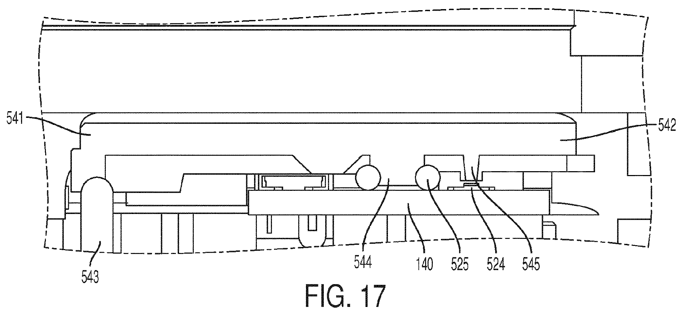

Figs. 15-17 illustrate an exemplary embodiment of a mechanical functioning of the button 531 shown in Fig. 5B. As previously discussed, a microswitch 524 may be mounted on a circuit board 140. As shown in Figs. 15-17, the button 531 is levered about a pivot 543 at a first end 541 of the lever. The pivot 543 may be a projection from the cradle 16. Near the second end 542 of the button 531, there is an actuating projection 545. When a user pushes on the button 531, it pivots about the pivot 543 and the actuating projection 545 contacts and actuates the microswitch 524.

As shown in Figs. 15-17, a biasing member 525 in the form of an O-ring biases the button 531 away from the circuit board 140 such that the actuating projection 545 is biased to a position where it does not actuate the microswitch 524. The O-ring 525 may be made of an elastic, resilient, non-conductive material such as rubber or silicone rubber. The material of the O-ring 525 may have a durometer of Shore A 30 or higher, or a Shore A of 40 or higher. For example, the O-ring may have a Shore A durometer of 60.

A button construction as shown in the exemplary embodiment of Figs. 15-17 may be advantageous for several reasons. As shown in Figs. 15-17, the O-ring 525 is disposed in contact with circuit board 140. When a rubber O-ring is used as a biasing member, its non-conductive nature prevents the part from causing an electrical short. Additionally, rubber O-ring 525 is readily available and easily mounted on projection 544. Furthermore, the amount of space which is available for the microswitch 524 is limited and using a resilient biasing member provides sufficient tension to bias the button 531 sufficiently and over a number of cycles. Although a rubber O-ring is shown in this particular exemplary embodiment, other constructions are contemplated. For example, a rubber piece in a different shape could be used. Additionally, a different material could be used for the biasing member 525.

As can be appreciated, the battery packs of the exemplary embodiments of the present application are intended to be coupled with electrically powered products such as power tools, outdoor power tools, home products and the like. Particularly, a rail from the power tool or other product will slide into the slot 610 and between a lower rail 611 and an upper surface 612 of the battery pack. Such a structure is shown in, for example, US Patent No. 6,729,413, which is incorporated by reference. A housing or other feature of the power tool product may also project outwardly. The button 531 of the exemplary embodiment is constructed so that it does not interfere with coupling of such a power tool product with the battery pack 100.

Accordingly, the button 531 of the exemplary embodiment does not project higher than the upper surface 612 of the battery pack which forms a lower end of the slot 610. In alternative embodiments, the button 531 may project only slightly above the lower end of the slot 610, for example, it may project up to 5 mm or up to 10 mm above the lower end of the slot 610.

Additionally, as shown, the button 531 is located on a sloping side portion 613 which slopes downwardly and away from the center of the battery pack towards the side 620 of the battery pack 100. This helps facilitate the button 531 not interfering with engagement of the battery pack 100 with tools.

The circuit board 140 may have an extension portion 142 as shown in Fig. 15. The extension portion 142 extends the circuit board out towards the side 620 of the battery pack 100. As shown in Fig. 15, the extension portion 142 accommodates the switch 524 as well as the O-ring biasing member 525. An outer edge of the extension portion 142 can extend so that it is very close to an inner portion of the side 620 of the housing 101 in the same horizontal plane. For example, the extension portion 142 can extend so that an outer edge of the extension portion 142 is 20 mm or less, 15 mm or less or 10 mm or less from an inner portion of the side 620 of the housing 101 in the same horizontal plane. In turn, the microswitch 524 can also be located close to an inner portion of the side 620 of the housing 101 that is in the same horizontal plane. For example, the microswitch 524 can be located such that a center of the switch is 25 mm or less, 20 mm or less or 15 mm or less from an inner portion of the side 620 of the housing 101 in the same horizontal plane.

The power tool battery pack 100 can be connected to a power tool to provide electrical power to the power tool through a connection section 103 through which electrical connectors 130 (Fig. 15) can be accessed. Additionally, battery pack 100 includes a charging connector or port 102. In the exemplary embodiment, the charging connector is a USB port which receives a USB cord 110. Other types of charging connectors could alternatively be used. The charging connector 102 allows the battery pack 100 to charge or power batteries and devices other than those with which it is designed to mate with through the connection section 103 (i.e., external devices). For example, the battery pack 100 may be connected to a phone or tablet computer through the USB cord 100 in order to allow the battery pack 100 to charge the phone or tablet computer.

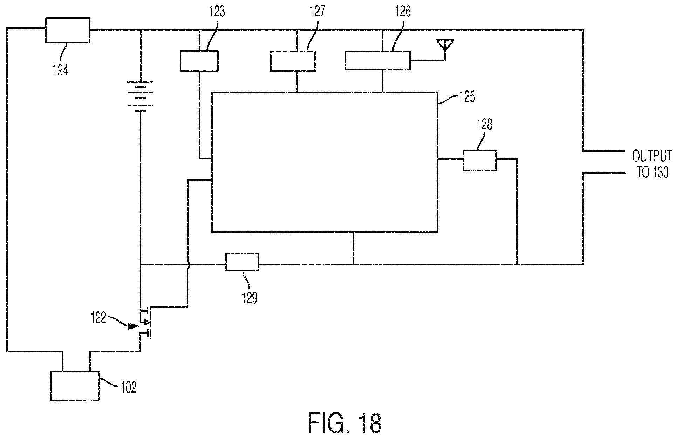

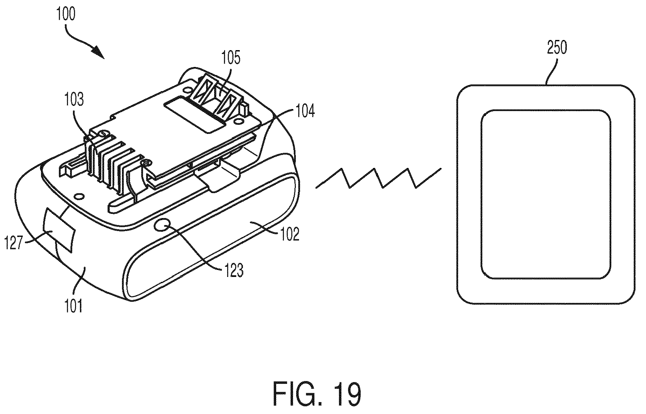

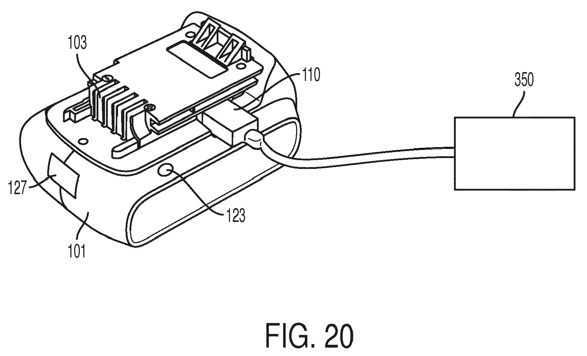

Fig. 18 is a simplified electrical diagram of an internal configuration of one of the battery packs and Fig. 19 is an illustration of a computing device and battery pack. Fig. 20 illustrates the battery pack charging an external device. In the embodiments of Figs. 18, 19 and 20, the battery pack 100 is used as an exemplary battery pack. However, the features illustrated therein can be used with any of the battery packs described herein. Also, the features of the battery pack shown in Figs. 18-20 and those shown in Fig. 2 can be combined in various ways.

As shown in Fig. 18, the packs include cells 120 which provide power to the power tool through electrical connectors 130 and/or to an external device to be charged through a voltage regulator 124 connected to a charging port 102. In this exemplary embodiment, the charging port is a USB port 102. The pack includes a controller 125 in the form of a microcontroller, a wireless communicator 126, a memory 128 and a current sensor 145. As discussed previously, the battery pack includes a PCB 140 and the components may be mounted on the PCB 140. If the battery pack includes second PCB 150, one or more of the components may be mounted on that PCB 150.

As shown in Fig. 18, the microcrontroller 125 is connected to a MOSFET switch 122 of the USB Port 102. The microcontroller 125 can control the switch 122 to enable and disable the USB Port 102. The wireless communicator 126 is operable to communicate with external computing devices, such as computing device 250 shown in Fig. 19. As is well known in the art, computing device 250 itself includes wireless communication capabilities and provide commands, data or other information to the battery pack 100 through the wireless communicator 126 and the microcontroller 125 may control the battery pack 100 accordingly.

As discussed above, the battery pack 100 includes a pairing switch 524. When the user depresses the pairing switch 524 a pairing sequence is initiated which can pair the battery pack 100 with the computing device 250 as is known in the art. In the exemplary embodiment, wireless communication may take place according to Bluetooth standards, but other wireless communication is also contemplated as part of this disclosure.

In one exemplary embodiment, the USB Port 102 may be disabled via the switch 122 after a pre-determined amount of time. For example, the USB Port 102 may be turned on by a user-actuable switch. As discussed above, the user actuatable button may activate the same switch as is used for pairing (i.e, switch 524). Additionally or alternatively, there may be a separate charging port button 123. User actuation of the switch 524 or 123 will enable the USB Port 102 by toggling the MOSFET switch 122. The USB Port 102 will then be enabled to charge an external device 350 for a predetermined amount of time. After the predetermined amount of time elapses, the microcontroller 125 can toggle the MOSFET switch 122 to disable the USB Port 102. This prevents the battery cells 120 from becoming drained or having an undervoltage situation. In exemplary embodiments of the invention, the predetermined amount of time may be 10 hours or less; 9 hours or less; 8 hours or less; 7 hours or less; or 6 hours or less. The predetermined amount of time may be determined in a variety of ways. A predetermined amount of time of 8 hours or less provides significant charging to an external device 350 while avoiding an undervoltage situation. The external device 350 may be any number of devices which needs electrical charge. For example, these could include a phone, laptop computer, tablet computer, lights, batteries and the like. It could also charge a screwdriver that includes the appropriate input, such as Black & Decker cordless screwdriver BDCS30C.

Additionally or alternatively to being activated by switch 524 or charging port switch123, the USB port 102 may be activated by the external computing device 250. A user of the computing device 250 can enter a command to turn on the USB port 102. The command is received through the wireless communicator 126 and the microcontroller 125 can toggle the MOSFET switch 122 to enable the USB port 102. The USB port 102 can then remain enabled for a predetermined amount of time, as discussed above.

The computing device 250 may also be used to program the predetermined amount of time. For example, rather than having an automatic predetermined amount of time such as 6 hours, the computing device 250 may be used to set a predetermined amount of time. The set time may be chosen from a selection of specific choices. For example, a user may be given a select number of choices and be able to select a predetermined amount of time as 2 hours, 3 hours, 4 hours, 5 hours, 6 hours or 7 hours. The user may also be able to input any selection for the predetermined amount of time.

In some instances it may be useful to have a maximum limit to the predetermined amount of time a user may input. For example, the user may be able to input any predetermined amount of time up to a maximum limit of 6 hours. The maximum limit can thus ensure that an undervoltage or other over-drainage of the battery cells 120 is avoided. The maximum limit may be, for example, 10 hours, 9 hours, 8 hours, 7 hours, 6 hours, 5 hours, 4 hours, 3 hours or 2 hours. In any of the embodiments, the amount of time remaining before the USB port 102 is disabled may be displayed on the computing device 250. U.S. Patent Application Publication No. 2014/0107853 is hereby incorporated by reference and discloses computing devices which display the charging of a battery pack. The features of those applications may be incorporated into the present system. For example, the computing device 250 of the present application may display both the state of charge of the battery pack 100 and the amount of time remaining before the charging port 102 is disabled. This can be done simultaneously or a user may toggle between the displaying the amount of time remaining and the state of charge.

In one exemplary embodiment, it the predetermined amount of time may be determined according to the amp-hour rating of the battery pack and the current drawn from the battery pack by the voltage regulator 124. The predetermined amount of time or the maximum limit may be set at a value equal to or greater than the watt-hour rating of a battery of the external device 350 being charged divided by the current times the voltage of the USB port 102. This may be, for example, 2 hours or greater; 3 hours or greater; or 4 hours or greater.

In another exemplary embodiment, the predetermined amount of time or maximum limit of the predetermined amount of time may be equal to or less than a wattage of the battery pack 100 divided by a power consumption of the voltage regulator 124. As with an above example, this can prevent undervoltage or overdraining of the battery cells 120 of the battery pack 100. The predetermined amount of time or maximum limit of the predetermined amount of time may also be set slightly higher. For example, it may be set equal to or less than 1.2 times; 1.3 times or 1.4 times a wattage of the battery pack 100 divided by a power consumption of the voltage regulator 124. In one example, the battery pack 100 has a maximum initial voltage of 20V and an amp-hour rating of 1.5 Amp-hours (Ah). In an example, the voltage regulator draws 300 mA of current and receives the 20V input voltage. The battery pack 100 wattage is the battery pack 100 voltage (i.e., 20V) multiplied by the battery pack amp hour rating (1.5Ah). Accordingly, a wattage of the battery pack 100 divided by a power consumption of the voltage regulator 124 is equal to 5 hours. The predetermined amount of time or maximum limit of the predetermined amount of time may thus be set at 5 hours or less. It may also be set at something higher such as 6 hours or less (1.2x); 6 1/2 hours or less (1.3x) or 7 hours or less (1.4x).

The computing device 250 may also be used to set the amount of current drawn from the voltage regulator 124. For example, the electronic device may be configured to allow a user to set the current drawn from the voltage regulator 124 to 300 mA, 400 mA, 500 mA or some other setting. The computing device 250 may be configured to allow the user to set the charging rate for the USB port 102. For example, the user may be able to set the USB port 102 so that it charges with a 1 A current. Other rates may also be set, for example, it may set a rate that is 2A or less; 1.5A or less; 1 A or less or 500mA or less.

The USB port 102 may also be disabled by simply pressing the user actuable button 123 and/or 524 a second time. In one embodiment, depressing the button may override the predetermined time. For example, if the USB port 102 is set to charge for a predetermined time of 6 hours, the USB port 102 may stay enabled for 6 hours or until a user actuates one of the buttons (123 and/or 524, as appropriate according to the embodiment) to disable the USB port 102. Similarly, a user may use the computing device 250 to disable the USB port 102 before the predetermined time elapses.

Depending upon the type of charging port 102, the voltage at which charging is done at the charging port 102 is done may be modified by modifying the voltage regulator 124. For example, the user may set the charging voltage to 3V, 5V, 10V, 12V, or 20V.

The battery pack may also be modified to include multiple charging ports 102. The multiple charging ports 102 may all be controlled independently by separate voltage regulators. For example, if a battery pack has two charging ports, one may be controlled by the user through the computing device 250 so that it charges at a first current and first voltage and the second charging port may be set by the user to charge at a second current and second voltage.

Various embodiments have been described. It should be understood that features of the various embodiments may be combined or used separately.

The description of the invention is merely exemplary in nature and, thus, variations that do not depart from the gist of the invention are intended to be within the scope of the invention. Such variations are not to be regarded as a departure from the scope of the invention.

## Claims

1. A power tool system, comprising:
at least one power tool;
a battery pack selectively coupleable with the power tool and providing power to the power tool, the battery pack comprising:
a housing,
at least one battery cell housed in the housing;
a circuit board housed in the housing;
a switch mounted on the circuit board;
a button actuatable by a user to actuate the switch mounted on the circuit board;
a biasing member which biases the button away from a position of actuating the switch;
a connection section which couples to the power tool and through which power is supplied from the battery pack to the power tool, wherein the connection section includes electrical connectors and the electrical connectors are mounted on the circuit board; and
wherein the biasing member is made of a non-conductive material.

2. The power tool system of claim 1, wherein the biasing member is made of an elastic material, and/or wherein the biasing member is made of a material with a Shore A durometer of 30 or greater.

3. The power tool system of claim 1 or claim 2, wherein activation of the switch initiates a pairing function of wirelessly pairing the battery pack with another device, and/or wherein activation of the switch initiates operation a charging port.

4. The power tool system of any preceding claim, wherein the battery pack further comprises a light which selectively illuminates the button.

5. The power tool system of any preceding claim, wherein the power tool comprises at least one of a drill and a saw.

6. A power tool system, comprising:
at least one power tool;
a battery pack selectively coupleable with the power tool and providing power to the power tool, the battery pack comprising:
a housing,
at least one battery cell housed in the housing;
a circuit board housed in the housing;
a switch mounted on the circuit board;
a button actuatable by a user to actuate the switch mounted on the circuit board;
a biasing member which biases the button away from a position of actuating the switch;
wherein the biasing member is made of a resilient material.

7. The power tool system of claim 6, wherein the biasing member is made of a non-conductive material, and/or wherein the biasing member is made of an elastic material, and/or wherein the biasing member is made of a material with a Shore A durometer of 30 or greater.

8. The power tool system of claim 6 or claim 7, wherein activation of the switch initiates a pairing function of wirelessly pairing the battery pack with another device.

9. The power tool system of any one of claims 6 to 8, wherein the battery pack further comprises a charging port and activation of the switch initiates operation the charging port.

10. The power tool system of any one of claims 6 to 9, wherein the battery pack further comprises a connection section which couples to the power tool and through which power is supplied from the battery pack to the power tool, wherein the connection section includes electrical connectors and the electrical connectors are mounted on the circuit board.

11. A power tool system, comprising:
at least one power tool comprising at least one of a drill and a saw;
a battery pack selectively coupleable with the power tool and providing power to the power tool, the battery pack comprising:
a housing,
at least one battery cell housed in the housing;
a circuit board housed in the housing;
a switch mounted on the circuit board;
a button actuatable by a user to actuate the switch mounted on the circuit board;
a connection section which couples to the power tool and through which power is provided from the battery pack to the power tool, wherein the connection section includes electrical connectors;
wherein the housing includes a bottom side and a top side, wherein the connection section is disposed on the top side; and
wherein the button faces in an upward direction.

12. The power tool system of claim 11, wherein the button is disposed on the top side of the housing.

13. The power tool system of claim 11 or claim 12, wherein the electrical connectors are mounted on the circuit board.

14. The power tool system of any one of claims 11 to 13, wherein actuation of the button initiates a pairing function of wirelessly pairing the battery pack with another device

15. The power tool system of any one of claims 11 to 14, wherein the battery pack further comprises a charging port and activation of the switch initiates operation the charging port.
